# EUROPÄISCHE PATENTSCHRIFT

(11) **EP 2 784 543 B1**
(45) Veröffentlichungstag und Bekanntmachung des Hinweises auf die Patenterteilung: **23.10.2019**
(21) Anmeldenummer: 14155390.9
(22) Anmeldetag: 17.02.2014
(51) Int. Cl.: G01S 19/41, G01C 15/00, G01S 19/07, G01S 19/32, G01S 19/33

(54) **Anordnung und Verfahren zur Positionserfassung mit einem Handgerät**
Assembly and method for position determination with a handheld device
Dispositif et procédé de détection de position à l'aide d'un appareil portatif

(30) Priorität: 27.03.2013 DE 102013205486
(43) Veröffentlichungstag der Anmeldung: 01.10.2014
(73) Patentinhaber: Deere & Company, Moline, IL 61265 (US)
(72) Erfinder: Feldhaus, Johannes, 53639 Königswinter (DE); Reutemann, Marcus, 68535 Edingen-Neckarhausen (DE)
(74) Vertreter: Holst, Sönke

(56) Entgegenhaltungen:
- WO-A2-2011/106278
- DE-A1- 4 342 171
- US-A- 5 365 447
- US-A1- 2002 072 850
- US-A1- 2011 071 759
- US-A1- 2011 096 319
- US-A1- 2011 285 587
- US-A1- 2012 139 782
- US-B1- 6 182 927

## Beschreibung

Die Erfindung betrifft eine Anordnung und ein Verfahren zur Positionserfassung mit einem Handgerät.

### Stand der Technik

In der Landwirtschaft besteht ein Bedarf daran, die Lage der Grenzen eines Feldes oder anderer Punkte des Feldes, wie beispielsweise Stellen, an denen Bodenproben entnommen wurden oder zu nehmen sind oder zu behebende Probleme auftreten, wie zu entfernende Steine oder fehlerhafte Drainagen, möglichst genau zu erfassen. Diese Positionsdaten dienen zur Planung und späteren Kontrolle von landwirtschaftlichen Bearbeitungsvorgängen. Auch bei anderen Arbeitsvorgängen, wie einer Beseitigung von Schäden an bekannten Stellen oder zum automatischen Lenken oder ortsspezifischen Ausbringen von Saatgut und Düngemitteln, besteht ein Bedarf daran, eine Position genau zu erfassen. Weitere Anwendungen finden sich auch in der Bauwirtschaft und in der Vermessungstechnik.

Im Stand der Technik wurde vorgeschlagen, die Feldgrenzen durch Umfahren des Feldes mit einem Fahrzeug unter gleichzeitiger Erfassung der Position des Fahrzeugs mittels eines satellitenbasierten Positionserfassungssystems (z.B. GPS, Global Positioning System) zu gewinnen (s. DE 43 42 171 A1). Bei dieser Vorgehensweise muss das Fahrzeug genau auf den Feldgrenzen bewegt werden. Ist das nicht möglich, z.B. weil dort Zäune stehen, wird ein Abstand eingegeben und der Fahrer versucht, stets mit dem eingegebenen Abstand von der Feldgrenze zu fahren. Dabei sind Fehler nie komplett zu vermeiden.

Weiterhin besteht die Möglichkeit, eine Arbeitsperson mit einem tragbaren Gerät auszustatten, mit dem er über ein Feld geht, um georeferenzierte Daten vom Feld aufzunehmen (P. Jürschik: Mit dem Computer auf das Feld, Landtechnik 3/1998, S. 142-143). Das tragbare Gerät ist als Notebook oder so genannter Pen-Computer ausgeführt und mit einem externen DGPS-Empfänger verbunden, dessen Korrektursignale über Radiowellen von stationären Sendern übertragen werden. Der Bediener geht mit dem Gerät über das Feld, um dort Schlagkonturen zu erfassen, Bodenproben zu nehmen oder Bonituren zu erstellen.

Derzeit werden tragbare, in einer Hand haltbare Handgeräte in Form so genannter Smartphones oder Tablets bereits serienmäßig mit DGPS-Empfängern ausgestattet. Sie werden von stationären Sendeeinrichtungen mit den differentiellen Korrektursignalen beaufschlagt (DE 100 54 764 A1). Ähnliche Geräte werden auch in der Vermessungstechnik verwendet (DE 11 2010 000 674 A1).

Die satellitengestützten Positionserfassungssysteme wie GPS, Glonass oder das zukünftige Galileo verwenden mehrere in einer Erdumlaufbahn befindliche, mit Atomuhren ausgestattete Satelliten, die jeweils Zeit- und Identitäts- bzw. Orts-Informationen enthaltende elektromagnetische (Radio-) Wellen abstrahlen. Die zugehörigen Empfänger müssen, wenn sie mit einer genauen (Atom-) Uhr versehen sind, jeweils die Signale von zumindest drei Satelliten empfangen, um ihre aktuelle Position im Raum bestimmen zu können. Hat der Empfänger keine genaue Uhr, ist ein Empfang von Signalen von vier Satelliten erforderlich. Die Genauigkeit der Positionsbestimmung steigt mit der Anzahl der jeweils empfangenen Satelliten.

Die Genauigkeit des Positionserfassungssystems wird üblicherweise durch den Empfang von Korrekturdaten enthaltenden Radiosignalen verbessert, die von Referenzstationen an bekannten Standorten ausgestrahlt werden. Man bezeichnet diese Systeme als differentielle Positionserfassungssysteme (z. B. DGPS). Die Referenzstationen empfangen Signale von Satelliten des Positionserfassungssystems und leiten daraus eine Positionsinformation ab, die sie in Korrekturdaten umwandeln und mittels eines Radiosenders zum Fahrzeug übertragen, das mit einem geeigneten Empfänger zum Empfang der Korrekturdaten ausgestattet ist. Anhand der Korrekturdaten und der von den Satelliten empfangenen Signale wird durch einen Rechner die Position des Fahrzeugs bestimmt. Es sind einerseits so genannte Wide Area Systeme mit stationären Referenzstationen mit relativ hoher Sendeleistung und andererseits lokale Referenzstationen bekannt, die mobil sind und in der Regel in der Nähe des jeweils zu bearbeitenden Feldes aufgestellt oder an erhöhten Standorten dauerhaft montiert werden. Ein Vorteil einer Positionsbestimmung mit einer lokalen Referenzstation gegenüber einem Wide Area System liegt in einer wesentlich höheren Genauigkeit, die erzielt wird, weil Netzwerklaufzeiten entfallen und das Korrektursignal in direkter Umgebung des Einsatzortes generiert wird.

Eine weitere Möglichkeit zur Verbesserung der Genauigkeit der Positionsbestimmung besteht darin, Signale der Satelliten des Positionsbestimmungssystems auf unterschiedlichen Frequenzen zu erfassen. Da atmosphärische Einflüsse durch ihre frequenzabhängige Dielektrizitätskonstante die Empfangszeitpunkte beeinflussen, können diese Einflüsse durch aufwändigere Mehrfrequenzempfänger ausgeglichen werden.

Die US 20120139782 A1 schlägt vor, durch ein erstes Handgerät (Smartphone), das Signale von Satelliten eines Positionsbestimmungssystems empfängt, lokale differentielle Korrekturdaten zu erzeugen, die an ein zweites Handgerät übersandt werden. Da das erste Handgerät sich außerhalb eines Gebäudes befindet und freie Sicht auf den Himmel hat, kann es eine höhere Anzahl an Satelliten empfangen als das zweite Handgerät, das sich innerhalb eines Gebäudes befindet. Die Positionsdaten des zweiten Handgeräts werden demnach durch die differentiellen Korrekturdaten des ersten Handgeräts korrigiert.

### Aufgabe der Erfindung

Die Genauigkeit der Positionsbestimmungssysteme der derzeit verfügbaren Handgeräte ist für landwirtschaftliche Anwendungen üblicherweise nicht hinreichend, denn sie verfügen in der Regel nur über einen Einfrequenz-Empfänger. Die differenziellen Korrektursignale sind ebenfalls nicht sehr genau, da sie in recht großer Entfernung vom Handgerät erzeugt werden.

Das der Erfindung zu Grunde liegende Problem wird darin gesehen, eine Anordnung und ein Verfahren zur Erfassung der Position eines Handgeräts zu schaffen, bei der oder dem die erwähnten Nachteile nicht oder in einem verminderten Maße auftreten.

### Lösung

Dieses Problem wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Eine Anordnung zur Erfassung der Position eines Handgeräts umfasst ein Fahrzeug mit einem Positionsbestimmungssignalempfänger zum Empfang von Signalen der Satelliten eines Positionsbestimmungssystems und einem elektronischen Prozessor, der im Betrieb anhand von durch den Positionsbestimmungssignalempfänger des Fahrzeugs empfangenen Signalen ein lokales Korrektursignal erzeugt, mit dem die Genauigkeit einer anhand der Signale eines Positionsbestimmungssignalempfängers bestimmten Position verbesserbar ist. Ein tragbares Handgerät ist mit einem Positionsbestimmungssignalempfänger zum Empfang von Signalen der Satelliten des Positionsbestimmungssystems und einem elektronischen Prozessor ausgestattet, der im Betrieb Positionssignale vom Positionsbestimmungssignalempfänger des Handgeräts erhält, daraus Positionsrohdaten des Handgeräts ableitet und diese Positionsrohdaten zur Bestimmung der Position des Handgerätes verwendet. Die Positionsrohdaten des Handgeräts werden anhand des von Prozessor des Fahrzeugs bereitgestellten, lokalen Korrektursignals korrigiert.

Mit anderen Worten wird das lokale Korrektursignal des elektronischen Prozessors des Fahrzeugs auch zur Korrektur der Positionsrohdaten des Handgeräts verwendet. Dadurch lässt sich deren Genauigkeit wesentlich verbessern.

Die Arbeitsperson kann, wenn das Handgerät zur Kartierung von Punkten auf dem Feld dient, somit mit dem landwirtschaftlichen Fahrzeug auf das Feld fahren und dort mit dem Handgerät sukzessive an die zu kartierenden Positionen gehen. Die Positionsrohdaten des Handgeräts werden erfasst, anhand des lokalen Korrektursignals des Fahrzeugs korrigiert und kartiert. Auf diese Weise erfolgt die Kartierung mit höherer Präzision als bisher. Die Kartierung erfolgt in der Weise, dass das Handgerät an den zu kartierenden Punkt verbracht wird und auf eine entsprechende Bedienereingabe hin die nunmehr eingenommene Position des Handgeräts kartiert wird. Das Handgerät kann auch für andere Zwecke verwendet werden: so könnte es mit dem Korrektursignal versorgt als genauer Positionsempfänger auf einem Anbaugerät oder einer selbstfahrenden Sklaven-Maschine dienen und über eine geeignete Schnittstelle beispielsweise ortsspezifische Ansteuerungen von Aktoren des Anbaugeräts (z.B. für Ausbringmengen) vornehmen oder die Lenkung der Sklaven-Maschine parallel zu dem als Meister-Maschine dienenden Fahrzeug steuern.

Der elektronische Prozessor des Fahrzeugs kann das lokale Korrektursignal anhand von auf mehreren, unterschiedlichen Frequenzen empfangenen Signalen von Satelliten des Positionsbestimmungssystems (oder mehrerer, unterschiedlicher Positionsbestimmungssysteme) und/oder anhand von Signalen von geostationären Satelliten und/oder anhand von durch Radiowellen übertragenen Korrekturdaten von stationären und/oder mobilen Referenzstationen und/oder anhand von per Internet bzw. einer Mobilfunkverbindung empfangenen Korrekturdaten erzeugen. Hierzu sei beispielsweise auf die Offenbarung der WO 2011/106278 A2 verwiesen.

Die Korrektur der Positionsrohdaten des Handgeräts erfolgt durch den elektronischen Prozessor des Handgeräts oder den elektronischen Prozessor des Fahrzeugs. In der erstgenannten Ausführungsform ist somit der elektronische Prozessor des Handgeräts drahtlos signalübertragend mit dem elektronischen Prozessor des Fahrzeugs verbunden und erhält die lokalen Korrektursignale des elektronischen Prozessors des Fahrzeugs und korrigiert die Positionsrohdaten des Handgeräts anhand dieser Korrektursignale. Bei der zweitgenannten Ausführungsform hingegen ist der elektronische Prozessor des Handgeräts drahtlos signalübertragend mit dem elektronischen Prozessor des Fahrzeugs verbunden und übersendet die Positionsrohdaten des Handgeräts an den elektronischen Prozessor des Fahrzeugs, welcher die Positionsrohdaten des Handgeräts anhand seiner lokalen Korrektursignale korrigiert.

Weiterhin kann das Handgerät mit einer Kamera ausgestattet sein und ein Foto der zu kartierenden Position abgespeichert werden. Das Foto kann später dazu dienen, weitere Maßnahmen zu planen, z.B. eine defekte Drainage zu reparieren oder einen Stein vom Feld zu entfernen. Zur Erleichterung des Wiederauffindens der Position, an dem das Foto aufgenommen wurde, kann das Handgerät mit einem Neigungssensor zur Erfassung der Orientierung des Handgeräts im Raum versehen sein und die Daten des Neigungssensors mit dem Foto und den Positionsdaten abgespeichert werden. Der Neigungssensor kann in an sich bekannter Weise einen Trägheitssensor und/oder einen Kompass umfassen.

Auch besteht die Möglichkeit, dass der elektronische Prozessor des Handgeräts mittels eines Bildverarbeitungsprogramms einen Punkt im Foto identifiziert und seine Position anhand der Daten des Neigungssensors und der Positionssignale vom Positionsbestimmungssignalempfänger berechnet. Hierbei können weiterhin auch Signale von der Optik der Kamera herangezogen werden, die eine Bestimmung der Entfernung zwischen dem Handgerät und dem aufgenommenen Objekt ermöglichen, z.B. Brennweiten- und Autofokusentfernungseinstellwerte. Es wird somit die Möglichkeit geschaffen, auch schwer zugängliche Punkte eines Feldes zu kartieren. Bei einer einfacheren Ausführungsform wird das Handgerät möglichst genau über den Punkt gehalten und anhand eines eingebauten, mechanischen oder elektronischen Lotes die horizontale Ausrichtung korrigiert. Wenn der Punkt dann möglichst genau an einer spezifizierten Stelle der Anzeigevorrichtung des Handgeräts liegt, erfolgt eine entsprechende Eingabe in das Handgerät und der Punkt wird kartiert.

Vorzugsweise kann der elektronische Prozessor des Fahrzeugs dazu verwendet werden, (korrigierte oder unkorrigierte) Positionsdaten von dem an eine bekannte Position des Felds verbrachten Handgerät zu erhalten und (ggf. nach Korrektur anhand des lokalen Korrektursignals) zur Referenzierung der Positionssignale vom Positionsbestimmungssignalempfänger zu verwenden. Die bekannte Position kann beispielsweise ein Grenzstein sein. Durch die Referenzierung der Positionsdaten des elektronischen Prozessors des Fahrzeugs auf die bekannte Position können die Positionsgenauigkeit verschlechternde Einflüsse, wie sie durch tektonische Verschiebungen, fehlende Langzeitstabilität oder Wechsel von Korrekturdiensten bedingt sein können, ausgeglichen werden. In einem Speicher des elektronischen Prozessors des Fahrzeugs abgelegte Karten z.B. für variable Ausbringraten können auf diese Weise auf den bekannten Punkt referenziert und positionsgenau ausgelesen werden. Es besteht auch die Möglichkeit, die erwähnten tektonischen Korrekturen anderweitig durchzuführen, z.B. durch Herunterladen entsprechender Daten für die tektonische Verschiebung von geeigneten Internetseiten.

Die Positionsdaten des Handgeräts können durch Positionserfassung an einer ersten Position, die nicht von einer Abschattung z.B. durch Bäume betroffen ist, anhand der Positionssignale vom Positionsbestimmungssignalempfänger, und durch Positionserfassung an einer zweiten Position, die von Abschattung betroffen ist, durchgeführt werden. Die Positionsunterschiede zwischen der ersten und zweiten Position werden mittels eines Trägheitssensors des Handgeräts erfasst. Sie können alternativ oder zusätzlich durch Laufzeitmessung eines Signals zwischen dem Fahrzeug und dem Handgerät oder umgekehrt erfasst werden. Es besteht auch die Möglichkeit, anschließend eine weitere Messung an einem nicht von Abschattung betroffenen Punkt durchzuführen und diese zur Verbesserung der Genauigkeit heranzuziehen. Auch möglich ist hier ein sogenannter Rückwärtsschnitt: Es werden Punkte im nicht abgeschatteten Bereich mit dem korrigierten Positionsbestimmungssignalempfänger des Handgeräts bestimmt und für die Kameraalgorithmen erkennbar markiert. Anschließend wird von dem zu bestimmenden Punkt aus ein Foto in Richtung der markierten Punkte erzeugt. Über die integrierte Sensorik (Neigungssensor mit Trägheitssensor und/oder Kompass) des Handgeräts kann die Ausrichtung bestimmt werden. Über die Punkte im Feld können über einen Rückwärtsschnitt (oder die Brennweite und eingestellte Entfernung des Autofocus der Kamera) die Position bestimmt werden.

### Ausführunqsbeispiel

In den Zeichnungen sind zwei nachfolgend näher beschriebene Ausführungsbeispiele der Erfindung dargestellt. Es zeigt:
- Fig. 1: eine schematische Ansicht einer mobilen Referenzstation, eines landwirtschaftlichen Fahrzeugs und eines Handgeräts bei der Vermessung der Grenzen eines Feldes,
- Fig. 2: ein Flussdiagramm für eine erste mögliche Vorgehensweise, nach dem die Prozessoren der Referenzstation, des Fahrzeugs und des Handgeräts bei der Vermessung vorgehen, und
- Fig. 3: ein Flussdiagramm für eine zweite mögliche Vorgehensweise, nach dem die Prozessoren der Referenzstation, des Fahrzeugs und des Handgeräts bei der Vermessung vorgehen.

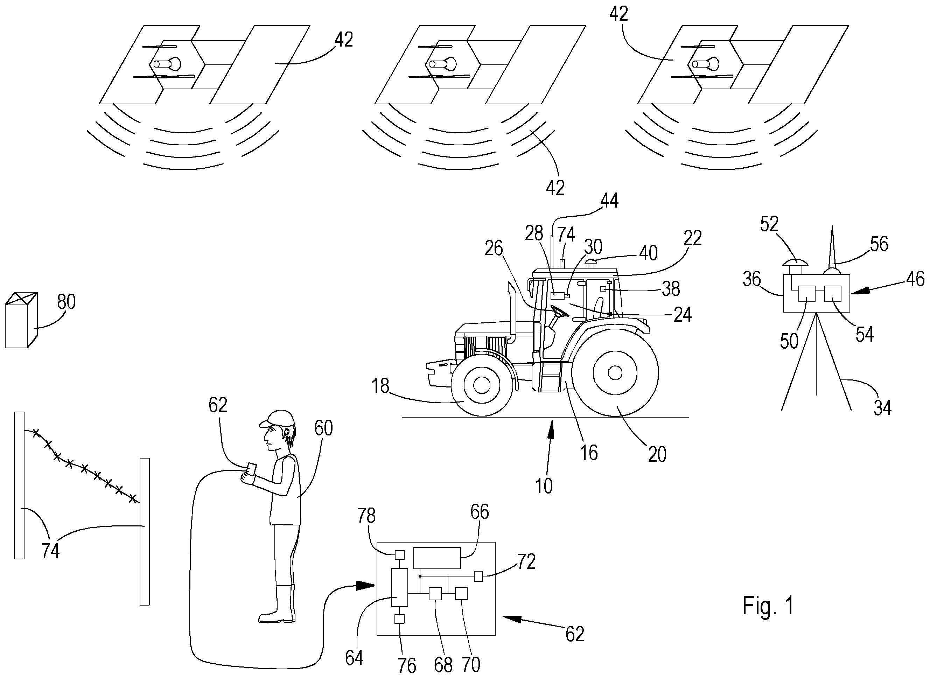

Die Figur 1 zeigt eine seitliche Ansicht eines landwirtschaftlichen Fahrzeugs 10 in Form eines Traktors. Das Fahrzeug 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz, Pedale (nicht gezeigt) und ein virtuelles Terminal 28. Das virtuelle Terminal 28 ist mit einer Datenübertragungseinrichtung 30 verbunden, die in der dargestellten Ausführungsform ein serieller Datenbus ist.

Die Datenübertragungseinrichtung 30 ist weiterhin mit einem elektronischen Prozessor 38, der direkt oder über die Datenübertragungseinrichtung 30 mit einem Positionsbestimmungssignalempfänger 40 zum Empfang von Signalen von Satelliten 42 eines Positionsbestimmungssystems (z. B. GPS, Glonass und/oder Galileo) und einer Empfangseinheit 44 verbunden, die zum Empfang von auf Radiowellen aufmodulierten Korrekturdaten dient, die von einer mobilen Referenzstation 46 über ein geeignetes, beliebiges Protokoll abgestrahlt werden. Die Referenzstation 46 könnte auch stationär sein oder sich aus einem Netz von stationären Referenzstationen zusammensetzen.

Die mobile Referenzstation 46 umfasst ein dreibeiniges Stativ 34, auf dem ein Gehäuse 36 befestigt ist, das einen elektronischen Prozessor 50 enthält, der mit einem Positionsbestimmungssignalempfänger 52 und über eine Sende- und Empfangseinheit 54 mit einer Radioantenne 56 verbunden ist. Die mobile Referenzstation wird im Betrieb am Rand eines Felds oder an einer anderen, geeigneten Stelle aufgestellt. Der Positionsbestimmungssignalempfänger 52 beaufschlagt den Prozessor 50 mit Positionssignalen, die er aus Signalen ableitet, die er von den Satelliten 42 empfängt. Der Prozessor 50 erzeugt anhand der Positionssignale Korrekturdaten, die durch die Sende- und Empfangseinheit 54 auf Radiofrequenzen aufmoduliert und über die Radioantenne 56 abgestrahlt werden.

Ein Bediener 60 hält ein Handgerät 62, das vorzugsweise in Form eines so genannten Smartphones oder Tablet-Computers realisiert ist, in seiner Hand. Das in der Hand handhabbare Handgerät 62 umfasst einen elektronischen Prozessor 64, eine berührungsempfindliche Anzeigeeinrichtung 66, einen Positionsbestimmungssignalempfänger 68, eine erste Sende- und Empfangseinheit 70 und eine zweite Sende- und Empfangseinheit 72, die sämtlich mit dem elektronischen Prozessor 64 verbunden sind. Die erste Sende- und Empfangseinheit 70 dient zum Empfang und Senden von Signalen über Telekommunikationsverbindungen, wie GSM, UMTS oder LTE. Die zweite Sende- und Empfangseinheit 72 dient zum Senden und Empfangen von Signalen über eine kurzreichweitige, drahtlose Verbindung, z.B. über WLAN oder Bluetooth und steht mit einer korrespondierenden, zweiten Sende- und Empfangseinheit 74 des Fahrzeugs 10 in Verbindung.

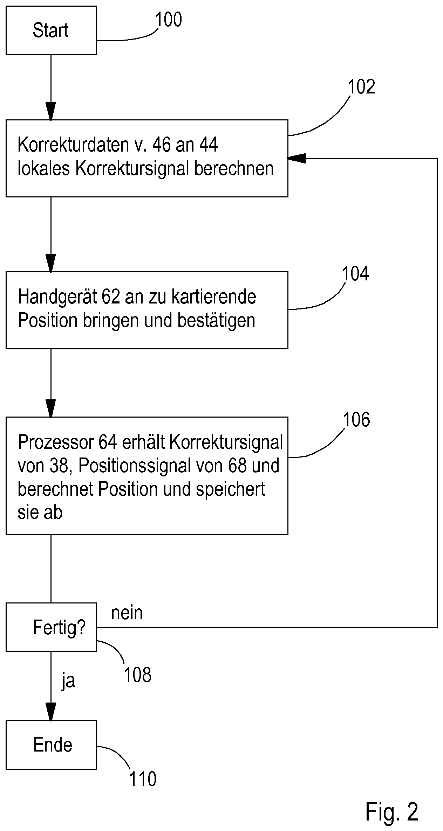

Auf dem elektronischen Prozessor 64 des Handgeräts 62 ist ein geeignetes Programm geladen, das eine in der Figur 2 gezeigte Vorgehensweise zum Kartieren der Grenzen eines Felds ermöglicht, die in der Figur 1 durch einen Zaun 74 markiert werden.

Der Prozessor 38 des Fahrzeugs 10 empfängt die Signale der Satelliten 42 durch den Positionsbestimmungssignalempfänger 40 auf mehreren Frequenzen und über die Empfangseinheit 44 die differentiellen Korrekturdaten von der mobilen Referenzstation 46 und bestimmt anhand der Signale der Satelliten 42 und der Korrekturdaten von der Referenzstation die jeweilige genauere Position des Fahrzeugs 10, die in an sich bekannter Weise zum selbsttätigen Lenken des Fahrzeugs 10 und/oder zur standortspezifischen Ausbringung von Materialien, wie Dünger oder Saatgut, dienen kann. Bei der hier gezeigten Anwendung steht das Fahrzeug 10 jedoch vorzugsweise still auf dem Feld und wird höchstens bewegt, wenn das Handgerät 62 außerhalb der Reichweite der zweiten Sende- und Empfangseinheit 74 gerät.

Nach dem Start im Schritt 100 werden im Schritt 102 Korrekturdaten von der mobilen Referenzstation 46 an die Empfangseinheit 44 des Fahrzeugs 10 gesendet, und der Prozessor 38 des Fahrzeugs 10 berechnet die Position des Fahrzeugs 10 anhand der differentiellen Korrekturdaten und der auf mehreren, unterschiedlichen Frequenzen empfangenen Signale der Satelliten 42 (eines oder mehrerer unterschiedlicher Positionsbestimmungssysteme, wie GPS, Glonass und/oder Galileo), um tropo-, iono- und/oder atmosphärisch bedingte Laufzeitunterschiede, Mehrwegeempfang, Abschattungen und andere Störungen auszugleichen. Hierzu sei beispielsweise auf die Offenbarung der WO 2011/106278 A2 verwiesen. Außerdem wird im Schritt 102 anhand der soeben ermittelten Position des Fahrzeugs 10 und der empfangenen differentiellen Korrekturdaten ein lokales Korrektursignal für das Handgerät 62 berechnet. Dabei wird die Tatsache ausgenutzt, dass dem Prozessor 38 die Position des Fahrzeugs 10 und die dort anzuwendenden Korrekturen anhand der empfangenen Signale bekannt sind. Diese bekannten Korrekturen werden im Folgenden als lokale Korrektursignale genutzt.

Im Schritt 104 verbringt der Bediener 60 das Handgerät 62 an eine zu kartierende Position. Bei der Ausführungsform nach Figur 1 kann er es beispielsweise auf einen Pfosten des Zauns 74 legen. Anschließend kann der Bediener 60 über die berührungsempfindliche Anzeigeeinrichtung 66 eine Eingabe an den Prozessor 64 geben, um zu bestätigen, dass sich das Handgerät 62 nun an einer zu kartierenden Position befindet.

Es folgt dann der Schritt 106, in dem der Prozessor 64 des Handgeräts 62 über die zweiten Sende- und Empfangseinheiten 72, 74 die lokalen Korrektursignale vom Prozessor 38 des Fahrzeugs 10 erhält, welche möglichst aktuell sind. Der Prozessor 64 erhält Positionssignale vom Positionsbestimmungssignalempfänger 68 und errechnet zunächst unkorrigierte Positionsrohdaten, in welche die Korrektursignale noch nicht einfließen. Anhand der Positionsrohdaten und der lokalen Korrektursignale bestimmt der Prozessor 64 dann die aktuelle Position des Handgeräts 62, welche mit der zu kartierenden Position übereinstimmt, und speichert diese in einem Speicher des Handgeräts 62 ab.

Es folgt der Schritt 108, in dem der Bediener über die berührungsempfindliche Anzeigeeinrichtung 66 eingibt, ob er den Kartierungsvorgang beendet hat. Ist das der Fall, folgt mit dem Schritt 110 das Ende der Datenaufnahme, anderenfalls wieder der Schritt 102. Die im Handgerät 62 abgespeicherten Daten hinsichtlich der Grenze des Felds können über die über die zweiten Sende- und Empfangseinheiten 72, 74 auf den Prozessor 38 des Fahrzeugs 10 übertragen werden, oder sie werden später drahtlos oder über eine Speicherkarte auf einen Hofcomputer (nicht gezeigt) geladen. Das Handgerät 62 könnte somit auch zum Farmmanagement genutzt werden, indem die drahtlose Übertragungsmöglichkeit des Handgerätes 62 (d.h. die zweite Sende- und Empfangseinheit 72) zur Übertragung von Informationen zu anderen Maschinen und/oder Servern verwendet wird. Die hochgenauen erfassten Positionen des Handgeräts 62 können genutzt werden, um das Farmmanagement zu verbessern.

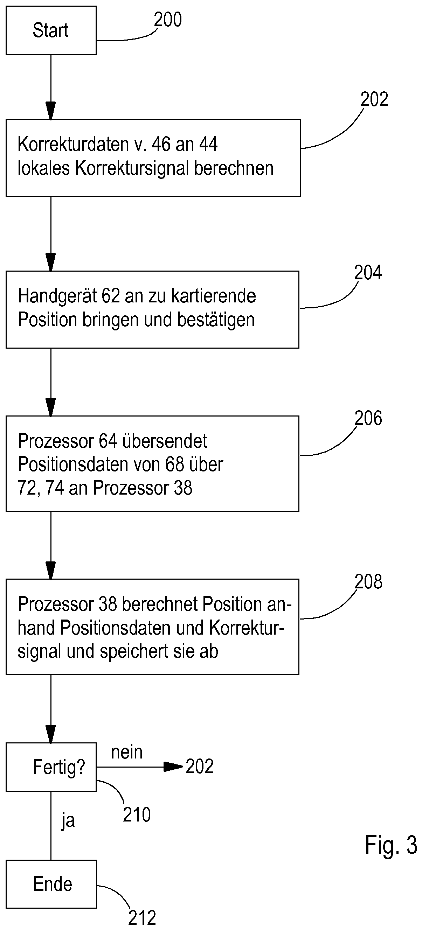

Die Figur 3 zeigt eine zweite, mögliche Vorgehensweise bei der Kartierung des Feldes. Nach dem Start im Schritt 200 werden im Schritt 202 Korrekturdaten von der mobilen Referenzstation 46 an die Empfangseinheit 44 des Fahrzeugs 10 gesendet, und der Prozessor 38 des Fahrzeugs 10 berechnet die lokalen Korrektursignale anhand der differentiellen Korrekturdaten und der auf mehreren, unterschiedlichen Frequenzen empfangenen Signale der Satelliten 42, um die oben erwähnten Störungen auszugleichen. Im Schritt 204 verbringt der Bediener 60 das Handgerät 62 an eine zu kartierende Position. Bei der Ausführungsform nach Figur 1 kann er es beispielsweise auf einen Pfosten des Zauns 74 legen. Anschließend kann der Bediener 60 über die berührungsempfindliche Anzeigeeinrichtung 66 eine Eingabe an den Prozessor 64 geben, um zu bestätigen, dass sich das Handgerät 62 nun an einer zu kartierenden Position befindet. Es folgt dann der Schritt 106, in dem der Prozessor 64 des Handgeräts 62 aus empfangenen Positionssignalen des Positionsbestimmungssignalempfängers 68 Positionsrohdaten ableitet und diese dann über die zweiten Sende- und Empfangseinheiten 72, 74 an den Prozessor 38 des Fahrzeugs 10 sendet. Im Schritt 208 berechnet dann der Prozessor 38 des Fahrzeugs 10 anhand der lokalen Korrektursignale aus dem Schritt 202 und anhand der empfangenen Positionsrohdaten des Positionsbestimmungssignalempfängers 68 die aktuelle Position des Handgeräts 62, welche mit der zu kartierenden Position übereinstimmt, und speichert diese in einem Speicher ab. Es folgt der Schritt 210, in dem der Bediener über die berührungsempfindliche Anzeigeeinrichtung 66 eingibt, ob er den Kartierungsvorgang beendet hat. Ist das der Fall, folgt mit dem Schritt 212 das Ende der Datenaufnahme, anderenfalls wieder der Schritt 202. Die vom Prozessor 38 des Fahrzeugs 10 abgespeicherten Daten hinsichtlich der Grenze des Felds werden später drahtlos oder über eine Speicherkarte auf einen Hofcomputer (nicht gezeigt) geladen.

Es ist anzumerken, dass verschiedene Modifikationen und Ergänzungen der vorliegenden Erfindung denkbar sind. So kann das Handgerät 62 mit einer Kamera 76 und einem Neigungssensor 78 ausgestattet sein, der die Neigung des Handgeräts 62 im Raum (d.h. entlang seiner drei Achsen) erfasst. Die Kamera 76 kann verwendet werden, um ein Foto eines zu kartierenden Gegenstandes zu erstellen, z.B. eines Pfostens des Zauns 74 in der Figur 1. In den Schritten 104 und 204 muss das Handgerät 62 somit nicht auf den Pfosten gelegt werden, der möglicherweise schwer zu erreichen sein kann, wenn er z.B. auf der anderen Seite eines Grabens steht. Auf dem Prozessor 64 des Handgeräts 62 läuft eine Bildverarbeitungssoftware, die anhand des Fotos das Objekt erkennt und mittels der Daten des Objektivs (Brennweite, eingestellte Entfernung des Autofocus des Objektivs) und der Positionssignale des Positionsbestimmungssignalempfängers 68 sowie des Neigungssensors 78 die genaue räumliche Lage des Objekts erkennt. Diese erkannte Lage wird dann in den Schritten 106 und 206 verwendet. Das Foto kann auch aufgenommen und abgespeichert werden, um Missstände zu dokumentieren und weitere Maßnahmen zu planen.

Weiterhin kann das Handgerät 62 an einen Referenzpunkt auf dem Feld verbracht werden, z.B. auf einen Grenzstein 80 gelegt werden. Dort wird die Position des Handgeräts 62 auf eine entsprechende Eingabe des Bedieners hin erfasst, analog zu den Schritten 106 und 206 und an den Prozessor 38 des Fahrzeugs 10 übersandt, wobei die lokalen Korrektursignale auf der Seite des Handgeräts 62 (wie in Figur 2) oder auf der Seite des Prozessors 38 des Fahrzeugs 10 (wie in Figur 3) zur Verbesserung der Genauigkeit angewandt werden können. Dem Prozessor 38 des Fahrzeugs 10 liegt letztendlich eine Information zur nun erfassten, genauen Lage des Referenzpunkts vor, die zur Referenzierung (Korrektur durch Verschiebung) einer in einem Speicher des Prozessors 38 kartierten Lage des Referenzpunkts herangezogen wird. Auf diese Weise lassen sich seit einer letzten Vermessung des Feldes aufgetretene Unsicherheiten ausgleichen, wie tektonische Verschiebungen oder Änderungen im Korrektursignal, die z.B. auf Anbieterwechsel des Korrektursystems oder eine an einer anderen Stelle als bei der vorigen Datenaufnahme aufgestellte Referenzstation 34 oder fehlende Langzeitstabilität des Korrektursystems zurückgehen können.

Schließlich sind Situationen denkbar, in denen der Positionsbestimmungssignalempfänger 68 aufgrund von Abschattung nicht ordnungsgemäß arbeitet. Derartige Situationen sind beispielsweise möglich, wenn am Rand des Feldes hohe Bäume stehen. Bei derartigen Situationen besteht die Möglichkeit, zunächst an einer nicht abgeschatteten Position des Felds die Position des Handgeräts 62 zu erfassen, wie in den Schritten 104 und 106 der Figur 2 und 204 bis 208 der Figur 3. Diese, erste Position wird somit durch den Prozessor 64 des Handgeräts 62 oder den Prozessor 38 des Fahrzeugs 10 abgespeichert. Anschließend wird das Handgerät 62 an die zu kartierenden, zweiten Positionen verbracht. Die dabei auftretenden Positionsänderungen werden durch Trägheitssensoren der Neigungssensoren 76 erfasst. Schließlich werden die genauen, zu vermessenden zweiten Positionen anhand der ersten Position und der Positionsänderungen evaluiert. Zur Abschlusskontrolle kann ein dritter Punkt wieder außerhalb des Abschattungsbereiches mit Hilfe des Positionsbestimmungssignalempfängers 68 und der lokalen Korrekturen bestimmt werden. Auftretende Positionsabweichungen der Trägheitsmessung zum dritten Punkt können ausgeglichen werden, um am zweiten Punkt anteilig als Verbesserungen angebracht werden.

Bei einer anderen Ausführungsform wird die Entfernung zwischen den zweiten Sende- und Empfangseinheiten 72, 74 an den ersten und zweiten Positionen auf Laufzeitbasis ermittelt und anhand der gemessenen Entfernungen die zweiten Positionen evaluiert, wobei mit der Kamera an der zweiten Position ein Bild von der ersten Position gemacht werden kann, das zur genaueren Bestimmung der zweiten Position dient. Dabei können durch die Positionsbestimmungssignalempfänger 40 und 68 von den Satelliten 42 empfangene Signale als Synchronisationssignale dienen. Weiterhin können die Trägheitssensorik und/oder der Kompass zur Bestimmung der Kameraausrichtung eingesetzt werden, oder es werden mehrere Punkte außerhalb des Abschattungsbereiches bestimmt. Im zweiten Fall wird die Ausrichtung über einen Rückwärtsschnitt durchgeführt.

## Patentansprüche

1. Anordnung zur Erfassung einer Position eines Handgerätes (62), umfassend:
ein Fahrzeug (10) mit einem Positionsbestimmungssignalempfänger (40) zum Empfang von Signalen der Satelliten (42) eines Positionsbestimmungssystems und einem elektronischen Prozessor (38), der eingerichtet ist, anhand von durch den Positionsbestimmungssignalempfänger (40) des Fahrzeugs empfangenen Signalen ein lokales Korrektursignal zu erzeugen, mit dem die Genauigkeit einer anhand der Signale eines Positionsbestimmungssignalempfängers (40, 68) bestimmten Position verbesserbar ist;
ein tragbares Handgerät (62) mit einem Positionsbestimmungssignalempfänger (68) zum Empfang von Signalen der Satelliten (42) des Positionsbestimmungssystems und einem elektronischen Prozessor (64), der eingerichtet ist, Signale vom Positionsbestimmungssignalempfänger (68) des Handgeräts (62) zu erhalten und daraus Positionsrohdaten des Handgeräts (62) abzuleiten;
wobei die Positionsrohdaten des Handgeräts (62) anhand des von Prozessor (38) des Fahrzeugs (10) bereitgestellten, lokalen Korrektursignals korrigierbar sind und das Handgerät (62) an einen zu kartierenden Punkt verbringbar ist,
**dadurch gekennzeichnet, dass** der Prozessor (64) des Handgeräts (62) programmiert ist, auf eine Bedienereingabe hin die Position des an den zu kartierenden Punkt verbrachten Handgeräts (62) anhand der Positionssignale des Positionsbestimmungssignalempfängers (68) des Handgeräts (62) und des drahtlos vom Prozessor (38) des Fahrzeugs erhaltenen Korrektursignals zu berechnen und zur Kartierung in einem Speicher des Handgeräts (62) abzuspeichern oder auf die Bedienereingabe hin anhand der empfangenen Positionssignale des Positionsbestimmungssignalempfängers (68) des Handgeräts (62) Positionsrohdaten abzuleiten und drahtlos an den Prozessor (38) des Fahrzeugs (10) zu übersenden, welcher programmiert ist, anhand des lokalen Korrektursignales und der empfangenen Positionsrohdaten des Positionsbestimmungssignalempfängers (68) des Handgeräts (62) die aktuelle Position des Handgeräts (62) zu berechnen und diese zur Kartierung in einem Speicher abzulegen.

2. Anordnung nach Anspruch 1, wobei der elektronische Prozessor (38) des Fahrzeugs (10) betreibbar ist, das lokale Korrektursignal anhand auf mehreren Frequenzen empfangenen Signalen von Satelliten (42) des Positionsbestimmungssystems und/oder anhand von Signalen von geostationären Satelliten und/oder anhand von durch Radiowellen übertragenen Korrekturdaten von stationären und/oder mobilen Referenzstationen (46) und/oder anhand von per Internet empfangenen Korrekturdaten zu erzeugen.

3. Anordnung nach Anspruch 1 oder 2, wobei der Positionsbestimmungssignalempfänger (68) des Handgeräts (62) nur auf einer einzigen Empfangsfrequenz arbeitet.

4. Anordnung nach einem der Ansprüche 1 bis 3, wobei das Handgerät (62) mit einer Kamera (78) ausgestattet ist und ein Foto einer zu kartierenden Position abspeicherbar ist.

5. Anordnung nach Anspruch 4, wobei das Handgerät (62) mit einem Neigungssensor (76) und ggf. Kompass zur Erfassung der Orientierung des Handgeräts (62) im Raum versehen ist und die Daten des Neigungssensors (76) mit dem Foto und den Positionsdaten abspeicherbar sind.

6. Anordnung nach Anspruch 5, wobei der elektronische Prozessor (64) des Handgeräts (62) betreibbar ist, einen Punkt im Foto zu identifizieren und dessen Position anhand der Daten des Neigungssensors (76) und ggf. eines Kompasses und ggf. durch die Brennweite und/oder eingestellte Entfernung und der Positionssignale des Positionsbestimmungssignalempfängers (68) zu berechnen.

7. Anordnung nach einem der vorhergehenden Ansprüche, wobei der elektronische Prozessor (64) des Fahrzeugs (10) betreibbar ist, Positionsdaten von dem an eine bekannte Position des Felds verbrachten Handgerät (62) zu erhalten und zur Referenzierung der Positionssignale vom Positionsbestimmungssignalempfänger (40) des Fahrzeugs (10) zu verwenden.

8. Anordnung nach einem der vorhergehenden Ansprüche, wobei die Positionsdaten des Handgeräts (62) durch Positionserfassung an einer ersten Position, die nicht von Abschattung betroffen ist, anhand der Positionssignale vom Positionsbestimmungssignalempfänger (68), und durch Positionserfassung an einer zweiten Position, die von Abschattung betroffen ist, durchführbar ist, wobei die Positionsunterschiede zwischen der ersten und zweiten Position mittels eines Trägheitssensors (76) und/oder Kompass des Handgeräts (62) und/oder durch Laufzeitmessung eines Signals vom Fahrzeug (10) zum Handgerät (62) oder umgekehrt und/oder mittels eines durch eine Kamera (78) des Handgeräts (62) aufgenommenen Bildes erfassbar sind.

9. Verfahren zur Erfassung einer Position eines Handgerätes (62), umfassend folgende Schritte:
Empfangen von Signalen der Satelliten (42) eines Positionsbestimmungssystems durch einen Positionsbestimmungssignalempfänger (40) eines Fahrzeugs (10) und Erzeugen eines lokalen Korrektursignals, mit dem die Genauigkeit einer anhand der Signale des Positionsbestimmungssignalempfängers (40, 68) bestimmten Position verbesserbar ist, anhand von durch den Positionsbestimmungssignalempfänger (40) des Fahrzeugs empfangenen Signalen durch einen elektronischen Prozessor (38);
Empfangen von Signalen der Satelliten (42) des Positionsbestimmungssystems durch einen Positionsbestimmungssignalempfänger (68) eines tragbaren Handgeräts (62), Übertragen der Positionssignale des Positionsbestimmungssignalempfängers (68) des Handgeräts (62) an einen elektronischen Prozessor (64) des Handgeräts (62) und Verwenden der Positionssignale zum Ableiten von Positionsrohdaten des Handgeräts (62) zur Bestimmung der Position des Handgerätes (62);
wobei die Positionsrohdaten des Handgeräts (62) anhand des vom Prozessor (38) des Fahrzeugs bereitgestellten, lokalen Korrektursignals korrigiert werden,
**dadurch gekennzeichnet, dass** das Handgerät (62) an einen zu kartierenden Punkt verbracht wird und dass der Prozessor (64) des Handgeräts (62) auf eine Bedienereingabe hin die Position des an den zu kartierenden Punkt verbrachten Handgeräts (62) anhand der Positionssignale des Positionsbestimmungssignalempfängers (68) des Handgeräts (62) und des drahtlos vom Prozessor (38) des Fahrzeugs erhaltenen Korrektursignals berechnet und zur Kartierung in einem Speicher des Handgeräts (62) abspeichert oder auf die Bedienereingabe hin anhand der empfangenen Positionssignale des Positionsbestimmungssignalempfängers (68) des Handgeräts (62) Positionsrohdaten ableitet und drahtlos an den Prozessor (38) des Fahrzeugs (10) übersendet, welcher anhand des lokalen Korrektursignales und der empfangenen Positionsrohdaten des Positionsbestimmungssignalempfängers (68) des Handgeräts (62) die aktuelle Position des Handgeräts (62) berechnet und diese zur Kartierung in einem Speicher ablegt.

## Claims

1. Arrangement for detecting a position of a handset (62) comprising:
a vehicle (10) having a positioning signal receiver (40) for receiving signals of the satellites (42) of a positioning system and an electronic processor (38) which is configured for generating by means of signals received by the positioning signal receiver (40) of the vehicle a local correction signal by means of which the accuracy of a position determined by means of the signals of a positioning signal receiver (40, 68) can be improved;
a handset (62) comprising a positioning signal receiver (68) for receiving signals of the satellites (42) of the positioning system and an electronic processor (64) which is configured for receiving signals from the positioning signal receiver (68) of the handset (62) and deriving from these raw position data of the handset (62);
the raw position data of the handset (62) being correctable by means of the local correction signal provided by the processor (38) of the vehicle (10) and the handset (62) being able to be brought to a point that is to be mapped,
**characterized in that** the processor (64) of the handset (62) is programmed to respond to a user input by calculating the position of the handset (62) brought to the point that is to be mapped by means of the position signals of the positioning signal receiver (68) of the handset (62) and the correction signal wirelessly received from the processor (38) of the vehicle and by storing said position for mapping purposes in a memory of the handset (62) or to respond to the user input by deriving raw position data by means of the received position signals of the positioning signal receiver (68) of the handset (62) and by wirelessly transmitting said raw position data to the processor (38) of the vehicle (10), which processor is programmed to calculate the current position of the handset (62) by means of the local correction signal and the received raw position data of the positioning signal receiver (68) of the handset (62) and to store said current position for mapping purposes in a memory.

2. Arrangement according to Claim 1, wherein the electronic processor (38) of the vehicle (10) can be operated for generating the local correction signal by means of signals, received at a number of frequencies, from satellites (42) of the positioning system and/or by means of signals from geostationary satellites and/or by means of correction data transmitted by radio waves from stationary and/or mobile reference stations (46) and/or by means of correction data received by the Internet.

3. Arrangement according to Claim 1 or 2, wherein the positioning signal receiver (68) of the handset (62) operates only at a single receiving frequency.

4. Arrangement according to one of Claims 1 to 3, wherein the handset (62) is equipped with a camera (78) and a photo of a position to be mapped can be stored.

5. Arrangement according to Claim 4, wherein the handset (62) is provided with an inclination sensor (76) and possibly a compass for detecting the orientation of the handset (62) in space and the data of the inclination sensor (76) can be stored with the photo and the position data.

6. Arrangement according to Claim 5, wherein the electronic processor (64) of the handset (62) can be operated for identifying a point in the photo and calculating its position by means of the data of the inclination sensor (76) and possibly of a compass and possibly by means of the focal length and/or set distance and the position signals of the positioning signal receiver (68).

7. Arrangement according to one of the preceding claims, wherein the electronic processor (64) of the vehicle (10) can be operated for obtaining position data from the handset (62) brought to a known position of the field and using it for referencing the position signals from the positioning signal receiver (40) of the vehicle (10) .

8. Arrangement according to one of the preceding claims, wherein the position data of the handset (62) can be obtained by detecting the position at a first position which is not affected by shading, by means of the position signals from the positioning signal receiver (68) and by detecting the position at a second position which is affected by shading, wherein the differences in position between the first and second position can be detected by means of an inertial sensor (76) and/or compass of the handset (62) and/or by propagation time measurement of a signal from the vehicle (10) to the handset (62) or conversely and/or by means of a picture recorded by a camera (78) of the handset (62).

9. Method for detecting a position of a handset (62) comprising the following steps:
receiving signals of the satellites (42) of a positioning system by a positioning signal receiver (40) of a vehicle (10) and generating a local correction signal by means of which the accuracy of a position determined by means of the signals of the positioning signal receiver (40, 68) can be improved, by means of signals received by the positioning signal receiver (40) of the vehicle by an electronic processor (38);
receiving signals of the satellites (42) of the positioning system by a positioning signal receiver (68) of a handset (62), transmitting the position signals of the positioning signal receiver (68) of the handset (62) to an electronic processor (64) of the handset (62) and using the position signals for deriving raw position data of the handset (62) for determining the position of the handset (62);
wherein the raw position data of the handset (62) are corrected by means of the local correction signal provided by the processor (38) of the vehicle,
**characterized in that** the handset (62) is brought to a point that is to be mapped and **in that** the processor (64) of the handset (62) responds to a user input by calculating the position of the handset (62) brought to the point that is to be mapped by means of the position signals of the positioning signal receiver (68) of the handset (62) and the correction signal wirelessly received from the processor (38) of the vehicle and by storing said position for mapping purposes in a memory of the handset (62) or responds to the user input by deriving raw position data by means of the received position signals of the positioning signal receiver (68) of the handset (62) and by wirelessly transmitting said raw position data to the processor (38) of the vehicle (10), which processor calculates the current position of the handset (62) by means of the local correction signal and the received raw position data of the positioning signal receiver (68) of the handset (62) and stores said current position for mapping purposes in a memory.

## Revendications

1. Dispositif de détection d'une position d'un appareil portatif (62), comprenant:
un véhicule (10) avec un récepteur de signaux de détermination de position (40) pour la réception de signaux du satellite (42) d'un système de détermination de position et un processeur électronique (38), qui est conçu pour produire à l'aide de signaux reçus par le récepteur de signaux de détermination de position (40) du véhicule un signal de correction local, avec lequel la précision d'une position déterminée à l'aide des signaux d'un récepteur de signaux de détermination de position (40, 68) peut être améliorée;
un appareil manuel portatif (62) avec un récepteur de signaux de détermination de position (68) pour la réception de signaux du satellite (42) du système de détermination de position et un processeur électronique (64), qui est conçu pour recevoir des signaux du récepteur de signaux de détermination de position (68) de l'appareil manuel (62) et en déduire des données de position brutes de l'appareil manuel (62);
dans lequel les données de position de l'appareil manuel (62) peuvent être corrigées à l'aide du signal de correction local fourni par le processeur (38) du véhicule (10) et l'appareil manuel (62) peut être amené à un point à repérer,
**caractérisé en ce que** le processeur (64) de l'appareil manuel (62) est programmé pour calculer, suite à une entrée de commande, la position de l'appareil manuel (62) amené au point à repérer à l'aide de signaux de position du récepteur de signaux de détermination de position (68) de l'appareil manuel (62) et du signal de correction reçu sans fil du processeur (38) du véhicule et la mémoriser pour le repérage dans une mémoire de l'appareil manuel (62) ou pour déduire, suite à l'entrée de commande, à l'aide des signaux de position reçus du récepteur de signaux de détermination de position (68) de l'appareil manuel (62) des données de position brutes et les transmettre sans fil au processeur (38) du véhicule (10), qui est programmé pour calculer à l'aide du signal de correction local et des données de position brutes reçues du récepteur de signaux de détermination de position (68) de l'appareil manuel (62) la position actuelle de l'appareil manuel (62) et stocker celle-ci dans une mémoire pour le repérage.

2. Dispositif selon la revendication 1, dans lequel le processeur électronique (38) du véhicule (10) peut être utilisé pour produire le signal de correction local à l'aide de signaux reçus sur plusieurs fréquences du satellite (42) du système de détermination de position et/ou à l'aide de signaux de satellites géostationnaires et/ou à l'aide de données de correction transmises par des ondes radio de stations de référence stationnaires et/ou mobiles (46) et/ou à l'aide de données de correction reçues par Internet.

3. Dispositif selon une revendication 1 ou 2, dans lequel le récepteur de signaux de détermination de position (68) de l'appareil manuel (62) n'opère que sur une seule fréquence de réception.

4. Dispositif selon l'une quelconque des revendications 1 à 3, dans lequel l'appareil manuel (62) est équipé d'une caméra (78) et une photo de la position à repérer peut être mémorisée.

5. Dispositif selon la revendication 4, dans lequel l'appareil manuel (62) est muni d'un détecteur d'inclinaison (76) et éventuellement d'un compas pour la détermination de l'orientation de l'appareil manuel (62) dans l'espace et les données du détecteur d'inclinaison (76) avec la photo et les données de position peuvent être mémorisées.

6. Dispositif selon la revendication 5, dans lequel le processeur électronique (64) de l'appareil manuel (62) peut être utilisé pour identifier un point dans la photo et calculer sa position à l'aide des données du détecteur d'inclinaison (76) et éventuellement d'un compas et éventuellement par la distance focale et/ou la mise au point et des signaux de position du récepteur de signaux de détermination de position (68).

7. Dispositif selon l'une quelconque des revendications précédentes, dans lequel le processeur électronique (64) du véhicule (10) peut être utilisé pour recevoir des données de position de l'appareil manuel (62) amené à une position connue du champ et les utiliser pour référencer les signaux de position du récepteur de signaux de détermination de position (40) du véhicule (10) .

8. Dispositif selon l'une quelconque des revendications précédentes, dans lequel les données de position de l'appareil manuel (62) peuvent être exécutées par la détection de position à une première position, qui n'est pas affectée par un ombrage, à l'aide des signaux de position du récepteur de signaux de détermination de position (68), et par la détection de position à une deuxième position, qui est affectée par un ombrage, dans lequel les différences de position entre la première et la deuxième position peuvent être détectées au moyen d'un capteur d'inertie (76) et/ou d'un compas de l'appareil manuel (62) et/ou par la mesure du temps de parcours d'un signal du véhicule (10) à l'appareil manuel (62) ou inversement et/ou au moyen d'une image enregistrée par une caméra (78) de l'appareil manuel (62).

9. Procédé de détection d'une position d'un appareil manuel (62), comprenant les étapes suivantes:
réception de signaux du satellite (42) d'un système de détermination de position par un récepteur de signaux de détermination de position (40) d'un véhicule (10) et production d'un signal de correction local, avec lequel la précision d'une position déterminée à l'aide des signaux du récepteur de signaux de détermination de position (40, 68) peut être améliorée, à l'aide de signaux reçus par le récepteur de signaux de détermination de position (40) du véhicule, par un processeur électronique (38);
réception de signaux du satellite (42) du système de détermination de position par un récepteur de signaux de détermination de position (68) d'un appareil manuel portatif (62), transmission des signaux de position du récepteur de signaux de détermination de position (68) de l'appareil manuel (62) à un processeur électronique (64) de l'appareil manuel (62) et utilisation des signaux de position pour déduire des données de position brutes de l'appareil manuel (62) pour la détermination de la position de l'appareil manuel (62);
dans lequel on corrige les données de position brutes de l'appareil manuel (62) à l'aide du signal de correction local fourni par le processeur (38) du véhicule,
**caractérisé en ce que** l'on amène l'appareil manuel (62) en un point à repérer et **en ce que** le processeur (64) de l'appareil manuel (62) calcule, suite à une entrée de commande, la position de l'appareil manuel (62) amené au point à repérer à l'aide des signaux de position du récepteur de signaux de détermination de position (68) de l'appareil manuel (62) et du signal de correction reçu sans fil du processeur (38) du véhicule et la mémorise en vue du repérage dans une mémoire de l'appareil manuel (62) ou la déduit, suite à l'entrée de commande, à l'aide des signaux de position reçus du récepteur de signaux de détermination de position (68) de l'appareil manuel (62) et la transmet sans fil au processeur (38) du véhicule (10), qui calcule à l'aide du signal de correction local et des données de position brutes reçues du récepteur de signaux de détermination de position (68) de l'appareil manuel (62) la position actuelle de l'appareil manuel (62) et la stocke dans une mémoire pour le repérage.
